## Europäisches Patentamt
## European Patent Office
## Office européen des brevets

(19)

(11) Veröffentlichungsnummer: **0 018 429**
A1

(12) # EUROPÄISCHE PATENTANMELDUNG

(21) Anmeldenummer: **79101391.5**

(22) Anmeldetag: **08.05.79**

(51) Int. Cl.³: **G 11 B 3/62**

(43) Veröffentlichungstag der Anmeldung:
**12.11.80** Patentblatt **80/23**

(84) Benannte Vertragsstaaten:
**BE CH DE FR GB NL SE**

(71) Anmelder: **Sound-Source International
Donau 38
NL-1180 AT Amstelveen(NL)**

(72) Erfinder: **Frank, Reinhard, Ing.(grad)**

**D-2371 Embühren(DE)**

(74) Vertreter: **Stendel, Herbert
Nienkattbek 29
D-2371 Jevenstedt(DE)**

(54) **Vorrichtung zur schwingungsfreien Kupplung einer Schallplatte mit dem Plattenteller eines Plattenspielers.**

(57) Zur Tonwiedergabe von Schallplatten werden diese auf den Plattenteller (1) eines Plattenspielers gelegt, wobei der Plattenteller mit einer Auflage (2) zur Haftung der Schallplatte (4) versehen ist. Um störende Schwingungseinflüsse der Schallplatte bei der Tonwiedergabe zu vermeiden, wird die Schallplatte durch eine zweiteilige Kupplung (2,3) gehalten. Der Kupplungsteil (2) ist als Plattenauflage derart ausgebildet, daß nur der modulierte Abschnitt der Schallplatte aufliegt. Die satte Auflage der Schallplatte auf den als Plattenauflage ausgebildeten Kupplungsteil (2) wird durch Augsetzen des Kupplungsteiles (3) auf den Zentrierstift (6) des Plattentellers (1) des Plattenspielers erreicht. Dieser Kupplungsteil drückt nur auf den Etikettenabschnitt (8) der Schallplatte und kann mit einem Stroboskop zur Überprüfung der Umlaufgeschwindigkeit ausgebildet sein.

BAD ORIGINAL

Fig.1

PATENTANWALT
.HERBERT STENDEL

Nienkattbek 29
2371 Jevenstedt
Fernruf 04337 / 469

0018429

Datum: 30. April 1979

Vorrichtung zur schwingungsfreien Kupplung einer Schallplatte mit dem Plattenteller

eines Plattenspielers


Die Erfindung bezieht sich auf eine Vorrichtung zur schwingungsfreien Kupplung einer Schallplatte mit dem Plattenteller eines
Plattenspielers.

Es ist bekannt, daß bei der Wiedergabe von Schallplatten durch
eine unausgerichtete und ungenügende Auflage der Schallplatte
auf dem Plattenteller eines Plattenspielers die Schallplatte
durch den Luftschall zu Schwingungen angeregt wird, die Verzerrungen bei der Tonwiedergabe verursachen, die je nach der Plattenausführung recht störend sein können. Durch die unausgerichtete und ungenügende Auflage der Schallplatte auf dem Plattenteller entstehen  noch zusätzlich Schwingungen der Platte, so
daß eine gewisse Überlagerung von Störeinflüssen auftritt.

Um diese Störungen zu vermeiden bezw. auf ein Minimum herabzusetzen, sind bereits verschiedene Vorschläge bekannt geworden.
So wird zum Beispiel auf den Zentrierstift des Plattentellers
eine Vorrichtung aufgesetzt, die in der Mitte eine Dosenlibelle

tung aufweist, die die Lage der Schallplatte anzeigt. Diese Vorrichist jedoch nur eine Anzeigevorrichtung für die unausgerichtete
Lage, so daß zwar eine Ausrichtung vorgenommen werden kann, aber
keine ausreichende Kupplung der Schallplatte mit dem Plattenteller erzielt wird, wodurch eine Wiedergabeverzerrung infolge von
Schwingungen nicht vermieden wird.

Ein anderer Vorschlag sieht einen Austausch der Plattentellermatte vor, wobei diese Plattentellermatte aus einem Material besteht, das leichter und härter als Aluminium ist. Diese Matte
ist in der Mitte, also im Bereich des Etikettenteiles der Schallplatte leicht eingebuchtet, wodurch Schwingungen der Schallplatte ausgeschaltet werden sollen.

Diese bekannten Möglichkeiten zur Ausschaltung von störenden
Schwingungen der Schallplatte und zur Erzielung einer einwandfreien Auflage der Schallplatte auf dem Plattenteller haben die
bestehende Aufgabe jedoch nicht in der erwünschten Weise lösen
können.

Der Erfindung liegt daher die Aufgabe zugrunde, eine Vorrichtung
zur schwingungsfreien Kupplung einer Schallplatte mit dem Plattenteller eines Plattenspielers zu schaffen.

Diese Aufgabe ist gemäß der Erfindung dadurch gelöst, daß die
Vorrichtung aus einer Auflage für Schallplatte und einer auf
diese über den Zentrierstift des Plattentellers aufzusetzende,
die Schallplatte belastende Einrichtung besteht, wobei die unmittelbar auf den Plattenteller aufzulegende Plattenauflage aus
einem akustisch inerten Werkstoff hergestellt und mit an den

Rändern abgefasten Vertiefungen ausgebildet ist, die zur Aufnahme der verstärkten Abschnitte der Schallplatte dienen, sowie der Aufnahmebereich des modulierten Teiles der Schallplatte von innen nach außen verlaufend verstärkt ist.

Hierdurch wird erreicht, daß die Schallplatte in ihrem modulierten Bereich satt auf dem leicht konisch gestalteten Abschnitt der Plattenauflage aufliegt und damit eine Tonbeeinflussung durch Schwingungen bei der Wiedergabe ausgeschaltet wird, denn erst durch diese leicht konische Ausbildung des Auflagebereiches in Verbindung mit der auf die Schallplatte aufgesetzten Belastungsbezw. Kupplungseinrichtung wird die satte Auflage des modulierten Bereiches der Schallplatte gewährleistet.

Weiterhin wird durch die auf die Schallplatte aufzusetzende, in der Form eines abgestumpften Kegels oder dergleichen mit zylindrischen Ansatz, dessen Durchmesser geringer als die glatte Mittelfläche der Schallplatte und dessen Auflagefläche mit einer zentrischen Ausnehmung versehen ist, ausgebildete Einrichtung erreicht, daß sie nur mit dem äußeren Rand der Unterseite des zylindrischen Ansatzes auf der Schallplatte aufliegt und so infolge ihres Gewichtes die Schallplatte fest auf die Plattenauf- lage drückt. Um dabei die einwandfreie Ausrichtung der Schallplat te kontrollieren zu können ist vorteilhaft in die abgestumpfte Fläche des Kegels zentrisch eine Dosenlibelle eingesetzt.

Weiterhin kann zur Überprüfung der Umlaufgeschwindigkeit der Schallplatte der Außenumfang des zylindrischen Ansatzes mit einem Stroboskop versehen werden, so daß etwa vorhandene Drehzahlfehler festgestellt und entsprechend behoben werden können.

Weitere Eigenschaften und Vorteile der Erfindung gehen aus der
Beschreibung in Verbindung mit der Zeichnung eines Ausführungsbeispieles hervor. Es zeigen:

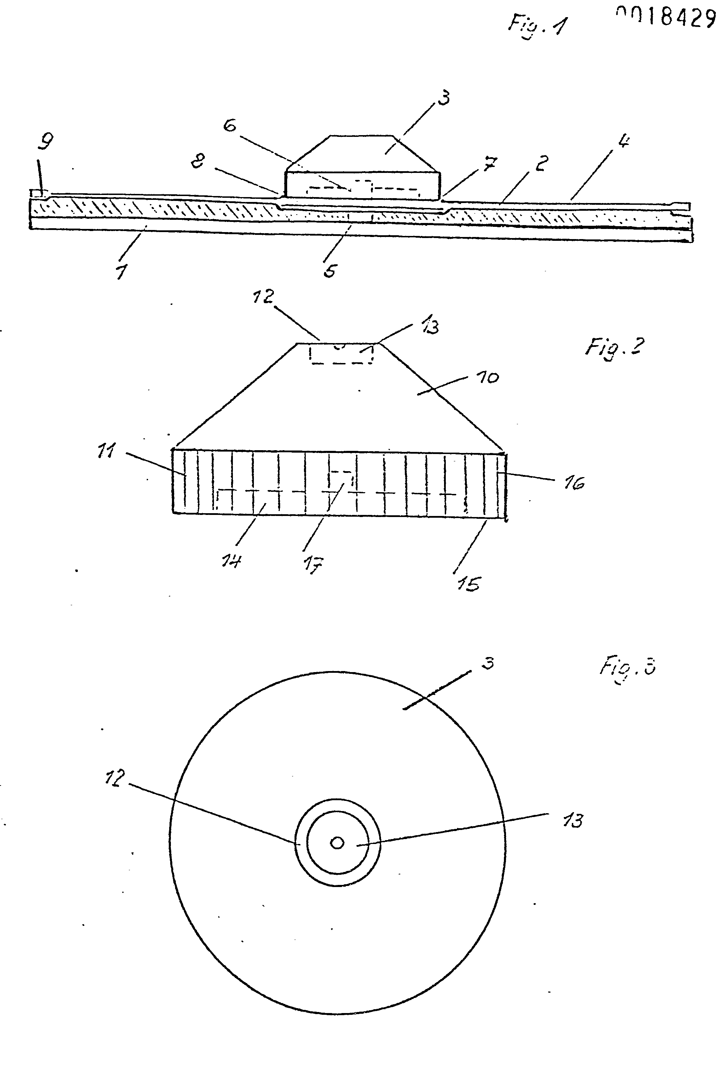

Fig. 1 eine Schnittdarstellung der Vorrichtung,

Fig. 2 eine Seitenansicht der auf die Schallplatte aufzusetzenden Kupplungseinrichtung und

Fig. 3 eine Draufsicht auf die Figur 2.

Auf den Plattenteller 1 eines Plattenspielers ist eine Auflage 2
gelegt, auf die wiederum die durch eine Vorrichtung 3 belastete
Schallplatte 4 gelegt ist.

Die Auflage 2 besteht aus einem akustisch inerten Werkstoff und
hat eine zentrische Bohrung 5 für den Zentrierstift 6 des Plattentellers 1. Weiterhin hat die Auflage 2 eine zentrische Vertiefung 7, deren Übergangsrand abgefast ist und zur Aufnahme des
mit einem Etikett versehenen Abschnittes 8 der Schallplatte 4
dient. Der sich an diese Vertiefung 7 der Auflage 2 anschließende Auflagebereich für die Schallplatte 4 ist nach außen hin in
der Stärke zunehmend ausgebildet und am Rand wieder über eine
Abfasung abgesetzt, so daß der stärkere Rand 9 der Schallplatte 4 frei liegt.

Um die satte Auflage der Schallplatte 4 zu gewährleisten, ist
diese durch eine Vorrichtung 2 belastet, die praktisch als Kupplung dient. Diese Vorrichtung ist vorteilhaft aus einem verhältnismäßig schweren Material gefertigt, sie besteht aus einem kesteht aus einem kegelstumpfförmigen Abschnitt 1o und einem zy-lindrischen Ansatz 11. In die abgestumpfte Fläche 12 des Kegel-stumpfes 1o ist eine Dosenlibelle 13 eingesetzt.

Der zylindrische Ansatz 11 ist auf der Auflagefläche mit einer Ausnehmung 14 versehen, so daß die Auflagefläche nur der verbleiben-de Rand 15 ist. Am Außenumfang ist ein Stroboskop 16 am zylindri-schen Ansatz 11 angeordnet, um die Umlaufgeschwindigkeit zu überprüfen.

Zentrisch in die Ausnehmung 14 des zylindrischen Ansatzes 11 ist ein Sackloch 17 zum Aufsetzen der Vorrichtung 3 auf den Zentrierstift 6 des Plattentellers 1 vorgesehen.

Bei einer anderen Ausbildungsart der Vorrichtung 3 ist zur Zentrierung anstatt eines Sackloches eine durchgehende Bohrung vorgesehen, so daß die Vorrichtung auch mit der dem Rand 15 gegen-überliegendenFläche auf die Platte aufgesetzt werden kann.

ŊŊ18429

Patentansprüche:

1.) Vorrichtung zur schwingungsfreien Kupplung einer Schallplatte mit dem Plattenteller eines Plattenspielers, dadurch gekennzeichnet, daß die Vorrichtung aus einer Auflage (2) für Schallplatte (4) und einer auf diese über den Zentrierstift des Plattentellers (1) aufzusetzende, die Schallplatte belastende Einrichtung (3) besteht, wobei die unmittelbar auf den Plattenteller aufzulegende Plattenauflage aus einem akustisch inerten Werkstoff hergestellt und mit an den Rändern abgefasten Vertiefungen (7) ausgebildet ist, die zur Aufnahme der verstärkten Abschnitte (8,9) der Schallplatte dienen, sowie der Schallplatteh-Auflagebereich für den modulierten Teil von innen nach außen verlaufend verstärkt ist.

2.) Vorrichtung nach Anspruch 1, dadurch gekennzeichnet, daß die über den Zentrierstift (6) des Plattentellers (1) aufzusetzede, die Schallplatte (4) belastende Einrichtung (3) die Form eines abgestumpften Kegels (1o) oder dergleichen mit einem zylindrischen Ansatz (11) hat, dessen Durchmesser geringer a die glatte Mittelfläche der Schallplatte und dessen Auflagefläche mit einer zentrischen Ausnehmung (14) versehen ist.

3.) Vorrichtung nach Anspruch 1 und 2, dadurch gekennzeichnet, daß in die abgestumpfte Fläche (12) des Kegels (1o) eine Dosenlibelle (13) zentrisch eingesetzt ist.

4.) Vorrichtung nach Anspruch 1 - 3, dadurch gekennzeichnet, daß am Außenumfang des zylindrischen Ansatzes (11) der Einrichtung (3) ein Stroboskop (16) vorgesehen ist.

Fig.1

0018429

Fig.2

Fig.3

Europäisches
Patentamt

**EUROPÄISCHER RECHERCHENBERICHT**

EP 79 101 391.5

| Kategorie | Kennzeichnung des Dokuments mit Angabe, soweit erforderlich, der maßgeblichen Teile | betrifft Anspruch |
|---|---|---|
| | FR - A - 1 295 378 (PILLET)<br>* gesamtes Dokument *<br>-- | 1-4 |
| | DE - U1 - 7 814 261 (FRANK)<br>* Ansprüche 1 bis 3; Fig. 2 *<br>-- | 1-4 |
| | DE - A1 - 2 514 514 (SONY CORP.)<br>* Ansprüche 1 und 13; Fig. 2 *<br>-- | 1 |
| | DE - B - 1 242 386 (PRESSWERK HERSCHEID)<br>* Patentanspruch *<br>-- | 1 |
| | DE - U - 7 623 839 (OTTO)<br>* Anspruch 1 *<br>-- | 3 |
| A | US - A - 4 012 048 (NEWCOMB AUDIO PRODUCTS)<br>* Zusammenfassung *<br>---- | |

**EINSCHLÄGIGE DOKUMENTE**

**KLASSIFIKATION DER ANMELDUNG (Int Cl.3)**

G 11 B 3/62

**RECHERCHIERTE SACHGEBIETE (Int. Cl.3)**

G 11 B 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Grunden angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 20-12-1979 | LEITHÄUSER |

EPA form 1503.1 06.78